# EUROPÄISCHE PATENTANMELDUNG

(11) **EP 1 975 123 A2**
(43) Veröffentlichungstag der Anmeldung: **01.10.2008**
(21) Anmeldenummer: 07009248.1
(22) Anmeldetag: 08.05.2007
(51) Int. Cl.: C01B 3/12, C01B 3/52, C01B 31/18

(54) **Verfahren und Vorrichtung zur Erzeugung von Synthesegas**

(30) Priorität: 29.03.2007 DE 102007015245
(71) Anmelder: Linde Aktiengesellschaft, 80807 München (DE)
(72) Erfinder: Kirchner, Lars, 82178 Puchheim (DE)

(57) **Zusammenfassung**

Die Erfindung betrifft Verfahren und eine Vorrichtung zur Erzeugung eines Wasserstoff (H₂) und/oder Kohlenmonoxid (CO) enthaltenden Gasproduktes mit definierter chemischer Zusammensetzung (Synthesegas) (9) aus einem Kohlenmonoxid (CO) enthaltenden Rohgas (Syntheserohgas) (1), wobei zumindest ein Teil des Syntheserohgases (4) mit Wasserdampf (5) angereichert und nachfolgend einer Konvertierung durch Wassergas-Shift (WS) sowie einer eine physikalische Gaswäsche umfassenden Gasreinigung (W) unterzogen wird, und wobei Gas zur Einstellung des Produktdruckes (Synthesegasdruck) verdichtet wird. Die Erfindung besteht darin, dass Syntheserohgas (1) einer Verdichtung (Rohgasverdichtung) (V) unterzogen wird.

## Beschreibung

Die Erfindung betrifft ein Verfahren zur Erzeugung eines Wasserstoff (H₂) und/oder Kohlenmonoxid (CO) enthaltenden Gasproduktes mit definierter chemischer Zusammensetzung (Synthesegas) aus einem Kohlenmonoxid (CO) enthaltenden Rohgas (Syntheserohgas), wobei zumindest ein Teil des Syntheserohgases mit Wasserdampf angereichert und nachfolgend einer Konvertierung durch Wassergas-Shift sowie einer eine physikalische Gaswäsche umfassenden Gasreinigung unterzogen wird, und wobei Gas zur Einstellung des Produktdruckes (Synthesegasdruck) verdichtet wird.

Weiterhin betrifft die Erfindung eine Vorrichtung zur Durchführung des erfindungsgemäßen Verfahrens.

Synthesegase, Wasserstoff enthaltende Gasgemische, werden großtechnisch als Rohstoffe zur Synthese einer großen Zahl von organischen und anorganischen Stoffen, wie z. B. Ammoniak, Methanol oder höheren Kohlenwasserstoffen (Fischer-Tropsch-Synthese), eingesetzt. Nach dem Stand der Technik, wird ein Synthesegas aus kohlenstoffhaltigen Einsatzstoffen gewonnen, die hierzu beispielsweise durch Dampfreformierung, Partielle Oxidation (POX) oder Autothermalreformierung (ATR) zunächst in ein Syntheserohgas umgesetzt werden. Ein derartiges Syntheserohgas enthält neben Wasserstoff und Kohlenmonoxid auch eine Reihe von Substanzen, die im Synthesegas unerwünscht sind. Zu nennen sind hier vor allem Kohlendioxid (CO₂) und Schwefelverbindungen. Darüber hinaus ist das Verhältnis von Wasserstoff und Kohlenmonoxid (H₂/CO-Verhältnis) im Syntheserohgas für gewöhnlich deutlich kleiner, als es für das Synthesegas gefordert wird.

Um das H₂/CO-Verhältnis zu vergrößern, wird zumindest eine Teilmenge des Syntheserohgases - evtl. nach Rußentfernung und Abkühlung - mit Wasser bzw. Wasserdampf angereichert und durch Wassergas-Shift konvertiert, wobei der im Syntheserohgas enthaltene CO-Anteil mit Wasser weitgehend vollständig in H₂ und CO₂ umgesetzt wird. Das durch Wassergas-Shift erzeugte Zwischenprodukt wird als konvertiertes Gas bezeichnet, während man bei dem Teil des Syntheserohgases, der keiner Wassergas-Shift unterzogen wird, von unkonvertiertem Gas spricht.

Über die bereits im Syntheserohgas enthaltenen unerwünschten Stoffe hinaus, entstehen im Laufe des Produktionsprozesses derartige Stoffe, wie z. B. CO₂, das bei der Wassergas-Shift erzeugt wird. Um diese unerwünschten Stoffe zu entfernen, wird das Syntheserohgas bzw. ein aus dem Syntheserohgas erzeugtes Zwischenprodukt einer Gasreinigung unterzogen, die zumeist eine Gaswäsche umfasst, bei welcher es sich häufig um eine physikalische Gaswäsche handelt. Da die Wirksamkeit von physikalischen Gaswäschen mit sinkender Temperatur zunimmt, wird das zu reinigende Gas sinnvoller Weise vor der Einleitung in die Gaswäsche abgekühlt.

Konvertiertes und unkonvertiertes Gas werden entweder vor der Gasreinigung zusammengeführt und anschließend gemeinsam weiter geleitet oder sie werden getrennt voneinander gereinigt und erst nach der Gasreinigung - evtl. nach Abtrennung weiterer Gasprodukte - zum Synthesegas vereinigt. Werden die beiden Gasströme getrennt voneinander gereinigt, so ist jede der beiden eingesetzten Gasreinigungseinrichtungen auf die ihr zugeführte Gaszusammensetzung und -menge optimiert. Je nach der Zusammensetzung des Syntheserohgases und der geforderten Reinheit des Synthesegases, kann die Gasreinigung neben einer Gaswäsche weitere Reinigungsschritte umfassen, wie beispielsweise die Abtrennung von Spurenkomponenten in einem Adsorbersystem.

Häufig ist die Differenz zwischen dem Druck des Syntheserohgases und dem Synthesegasdruck zu gering, um alleine aus ihr die unvermeidlichen Druckverluste des Verfahrens decken zu können. In diesen Fällen ist es notwendig, einen Verdichtungsschritt vorzusehen, um das Synthesegas mit dem geforderten Synthesegasdruck zur Verfügung stellen zu können. Besonders dann, wenn bereits die Vergasung des kohlenstoffhaltigen Einsatzes bei einem geringeren Druck als dem Synthesegasdruck durchgeführt wird, fallen für die Einstellung des Synthesegasdruckes erhebliche Kosten an, durch welche die Wirtschaftlichkeit der Synthesegaserzeugung entscheidend beeinflusst wird.

Stand der Technik ist es, den Synthesegasdruck unmittelbar vor der Abgabe des Synthesegases an der Anlagengrenze auf den geforderten Wert anzuheben, da der zu verdichtende Massenstrom an dieser Stelle des Prozesses am kleinsten und der für die Verdichtung erforderliche Energieaufwand somit am geringsten ist.

Aufgabe der vorliegenden Erfindung ist es, ein Verfahren der eingangs genannten Art sowie eine Vorrichtung zur Durchführung des Verfahrens so auszugestalten, dass die Einstellung des Synthesegasdruckes auf wirtschaftlichere Weise durchgeführt werden kann, als dies nach dem Stand der Technik möglich ist.

Diese Aufgabe wird verfahrensseitig erfindungsgemäß dadurch gelöst, dass zumindest ein Teil des Syntheserohgases einer Verdichtung (Rohgasverdichtung) unterzogen wird.

Vorzugsweise wird die Rohgasverdichtung so durchgeführt, dass der bei der Verdichtung erreichte Druck ausreichend ist, um die Druckverluste in den nachfolgenden Verfahrensschritten vollständig zu decken.

Die Erfindung geht von der Überlegung aus, dass zwar der Energieaufwand für die Gasverdichtung steigt, wenn sie auf eine andere Weise durchgeführt wird, als es dem Stand der Technik entspricht, dies aber mit Kosteneinsparungen an anderen Stellen des Prozesses mehr als ausgeglichen werden kann. Wird die Gasverdichtung beispielsweise vor der physikalischen Gaswäsche durchgeführt, sinken sowohl die Betriebs- als auch die Investitionskosten, da die Gaswäsche, deren Wirksamkeit mit steigendem Druck des zu waschenden Gases zunimmt, in diesem Fall mit einer verminderten Waschmittelmenge betrieben und gleichzeitig die Wascheinrichtung (Absorptionskolonne) kleiner und damit kostengünstiger ausgeführt werden kann. Eine Verdichtung unmittelbar vor der physikalischen Gaswäsche ist jedoch meist nicht sinnvoll, da beispielsweise ein durch Wassergas-Shift konvertierter Gasstrom einen hohen Wasserstoffanteil aufweist und zu einem großen Teil aus Kohlendioxid besteht, das im Synthesegas nicht mehr enthalten ist. In der Praxis überwiegt der Aufwand für die Verdichtung dieses Gasstroms deutlich die bei der Gaswäsche erzielbaren Vorteile.

Um genügend Wassermoleküle als Reaktionspartner zur Verfügung zu haben, wird das der Wassergas-Shift zuzuführende Syntheserohgas mit Wasser angereichert. Stand der Technik ist es, diese Anreicherung mit Hilfe einer Sättigungskolonne, wie sie dem Fachmann seit langem bekannt ist, und durch die Einleitung von Hochdruckwasserdampf durchzuführen. Da es wesentlich teuerer ist, Wasser in Form von Hochdruckwasserdampf in das Syntheserohgas einzubringen, als mittels Sättigungskolonne, wird angestrebt, in der Sättigungskolonne möglicht viel Wasser zu verdampfen und in das Syntheserohgas zu überführen. Am Kopf der Sättigungskolonne wird heißes Wasser zugeführt, das vorzugsweise mit Abwärme aus der Wassergas-Shift erhitzt wird. Am unteren Ende wird Syntheserohgas in die Sättigungskolonne eingeleitet, das anschließend im Gegenstrom zu dem nach unten fließenden heißen Wasser nach oben strömt und dabei mit Wasser angereichert wird. Mit steigendem Druck des in die Sättigungskolonne eintretenden Syntheserohgases, steigt auch die Temperatur, mit dem das heiße Wasser der Sättigungskolonne zugeführt werden kann und damit auch die durch das Syntheserohgas aufgenommene Wassermenge.

Eine bevorzugte Ausgestaltung des erfindungsgemäßen Verfahrens sieht daher vor, dass zumindest derjenige Teil des Syntheserohgases, der dafür vorgesehen ist, einer nachfolgenden Wassergas-Shift unterzogen zu werden, vor der Anreicherung des Syntheserohgases mit Wasser einer Verdichtung unterzogen wird.

Für den Fall, das nur ein Teil des Syntheserohgases durch Wassergas-Shift behandelt werden soll, wird derjenige Teil des Syntheserohgases der nicht durch Wassergas-Shift behandelt werden soll (unkonvertiertes Gas) aus dem Syntheserohgas abgezweigt, im Bypass zur Wassergas-Shift geführt und anschließend gemeinsam mit dem durch Wassergas-Shift erzeugten (konvertierten) Gasstrom oder getrennt von diesem einer Gasreinigung unterzogen.

Eine zweckmäßige Variante des erfindungsgemäßen Verfahrens sieht vor, dass der gesamte Syntheserohgasstrom verdichtet und das unkonvertierte Gas aus dem verdichteten Syntheserohgasstrom abgetrennt wird.

Eine andere Variante des erfindungsgemäßen Verfahrens sieht vor, dass das unkonvertierte Gas vor einer Rohgasverdichtung aus dem Syntheserohgasstrom abgetrennt wird. Wird das unkonvertierte Gas gemeinsam mit dem konvertierten Gas einer Gasreinigung unterzogen, so wird das unkonvertierte Gas auf den Druck des konvertierten Gases verdichtet, bevor es mit diesem vereinigt wird.

Wird das unkonvertierte Gas getrennt vom konvertierten Gas einer Gasreinigung unterzogen, so sieht eine zweckmäßige Ausgestaltung des erfindungsgemäßen Verfahrens vor, dass das unkonvertierte Gas vor der Gasreinigung verdichtet wird. In der Gasreinigung wird zumindest das Kohlendioxid aus dem unkonvertierten Gas abgetrennt, so dass der Volumenstrom des durch die Gasreinigung erzeugten Gases erheblich geringer ist, als derjenige des unkonvertierten Gases. Um die Kosten für die Gasverdichtung zu minimieren, sieht daher eine andere zweckmäßige Ausgestaltung des erfindungsgemäßen Verfahrens vor, dass das durch Gasreinigung aus dem unkonvertierten Gas erzeugte Gas verdichtet wird, wobei die Verdichtung auf einen Druck erfolgt, der ausreichend ist, um das Gas ohne eine weitere Verdichtung als Teil des Synthesegases an der Anlagengrenze abgeben zu können.

Eine weitere bevorzuge Ausgestaltung des erfindungsgemäßen Verfahrens sieht vor, dass in der oder den physikalischen Gaswäschen tiefkaltes Methanol als Waschmittel eingesetzt wird.

Die Erfindung weiterbildend wird vorgeschlagen, dass neben Synthesegas wenigstens ein weiteres Produkt aus dem Syntheserohgas gewonnen wird. Vorzugsweise handelt es sich hierbei um Wasserstoff, der zweckmäßig nach der Gasreinigung aus einem wasserstoffreichen Gasstrom abgetrennt wird.

Die Erfindung betrifft weiterhin eine Vorrichtung zur Erzeugung eines Wasserstoff (H₂) und/oder Kohlenmonoxid (CO) enthaltenden Gasproduktes (Synthesegas) mit definierter chemischer Zusammensetzung aus einem Kohlenmonoxid (CO) enthaltenden Rohgas (Syntheserohgas), umfassend einen Reaktor (Shift-Reaktor) in welchem mit Wasserdampf angereichertes Syntheserohgas einer Konvertierung durch Wassergas-Shift unterziehbar ist, eine physikalische Gaswäsche sowie einen Gasverdichter, mit dem zur Einstellung des Produktdruckes (Synthesegasdruck) Gas verdichtbar ist.

Vorrichtungsseitig wird die gestellte Aufgabe dadurch gelöst, dass es sich bei dem Gasverdichter um einen Verdichter zur Verdichtung von Syntheserohgas (Rohgasverdichter) handelt, in welchem das dem Shift-Reaktor zuzuführende Synthesegas verdichtbar ist.

Vorzugsweise ist das Syntheserohgas mittels des Rohgasverdichters auf einen Druck verdichtbar, der ausreichend hoch ist, um die Druckverluste in den nachfolgenden Einrichtungen vollständig zu decken.

Eine bevorzugte Ausgestaltung der erfindungsgemäßen Vorrichtung sieht vor, dass der Druck lediglich desjenigen Teils des Syntheserohgases, der dafür vorgesehen ist, in den Shift-Reaktor eingeleitet zu werden, mittels des Rohgasverdichters anhebbar ist.

Eine Variante der erfindungsgemäßen Vorrichtung sieht vor, dass nicht in den Shift-Reaktor einzuleitendes Syntheserohgases (unkonvertiertes Gas) nach dem Rohgasverdichter aus dem verdichteten Syntheserohgas abzweigbar und alleine oder gemeinsam mit dem aus dem Shift-Reaktor austretenden Gasstrom (konvertiertes Gas) einer vorzugsweise eine physikalische Gaswäsche umfassenden Gasreinigung zuführbar ist.

Eine andere Variante der erfindungsgemäßen Vorrichtung sieht vor, dass das unkonvertierte Gas vor dem Rohgasverdichter aus dem Syntheserohgas abzweigbar und alleine oder gemeinsam mit dem konvertierten Gas einer vorzugsweise eine physikalische Gaswäsche umfassenden Gasreinigung zuführbar ist.

Für den Fall, dass das konvertierte Gas in einer eigenen Gasreinigung gereinigt wird, sieht eine Weiterbildung der erfindungsgemäßen Vorrichtung einen zweiten Verdichter vor, der vor oder nach der Gasreinigung angeordnet ist. Ist der zweite Verdichter vor der Gasreinigung angeordnet, so ist mit ihm das unkonvertierte Gas verdichtbar. Ist der zweite Verdichter nach der Gasreinigung angeordnet, so ist mit ihm der aus dem unkonvertierten Gas durch die Reinigung in der Gasreinigung erzeugte Gasstrom verdichtbar, wobei der Druck des Gases soweit anhebbar ist, das es ohne eine weitere Verdichtung als Teil des Synthesegases an der Anlagengrenze abgeben werden kann.

Zur Reinigung von Syntheserohgasen haben sich seit Jahrzehnten Methanolwäschen bewährt, in denen tiefkaltes Methanol als Waschmittel eingesetzt wird. Vorzugsweise umfasst die erfindungsgemäße Vorrichtung daher zumindest eine physikalische Gaswäsche, die als Methanolwäsche ausgeführt ist.

Eine weitere Ausgestaltung der erfindungsgemäßen Vorrichtung sieht vor, dass sie eine Einrichtung zur Gewinnung eines Wasserstoffproduktes umfasst, die vorzugsweise nach der Gasreinigung angeordnet ist, und in welcher Wasserstoff aus einem wasserstoffreichen Gasstrom abtrennbar ist.

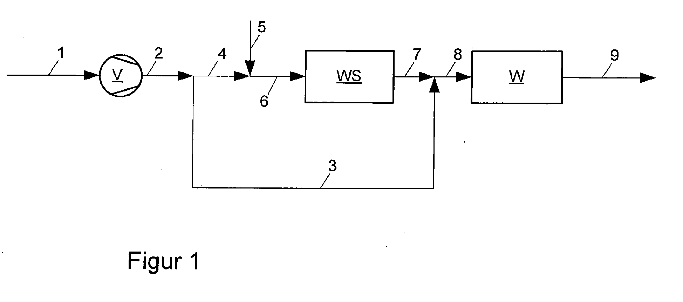

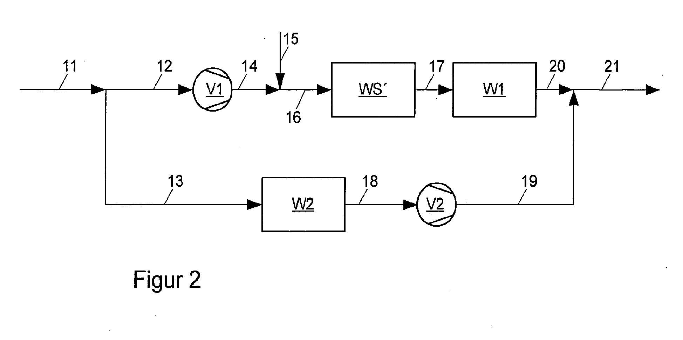

Im Folgenden soll die Erfindung anhand zweier in der Figuren 1 und 2 schematisch dargestellter Ausführungsbeispiele näher erläutert werden.

In den beiden Ausführungsbeispielen wird ein Syntheserohgas in ein Synthesegas mit definiertem Druck und einem definierten Verhältnis von Wasserstoff und Kohlenmonoxid (H₂/CO-Verhältnis) umgesetzt, wobei der Druck des Syntheserohgases alleine nicht ausreicht, um das Synthesegas mit dem geforderten Druck und/oder der geforderten Menge zu erzeugen.

In dem in Figur 1 dargestellten Ausführungsbeispiel wird das über Leitung 1 zugeführte Syntheserohgas dem Rohgasverdichter V zugeleitet und dort auf einen Druck verdichtet, der ausreichend hoch ist, um die Druckverluste in den nachfolgenden Verfahrensschritten zu decken. Das verdichtete Syntheserohgas 2 wird aus dem Rohgasverdichter V abgezogen und in die beiden Teilströme 3 und 4 aufgeteilt. Dem Teilstrom 4 wird über Leitung 5 die für eine nachfolgende Wassergas-Shift-Reaktion erforderliche Wassermenge in Form von Wasserdampf zugemischt, bevor er über Leitung 6 in den Wassergas-Shift-Reaktor WS eingeleitet und dort konvertiert wird. Das im Wassergas-Shift-Reaktor WS erzeugte Gas (konvertiertes Gas) wird über Leitung 7 abgezogen und mit dem unkonvertierten Teilstrom 3 zum Gastrom 8 vereinigt, der ein H₂/CO-Verhältnis aufweist, wie es für das Synthesegas gefordert wird. Durch die Abtrennung von unerwünschten Substanzen - vor allem von Kohlendioxid - wird aus dem Gasstrom 8 in der Gasreinigung W der Gasstrom 9 erzeugt, der nicht nur die chemisch Zusammensetzung, sondern auch den geforderte Druck des Synthesegases aufweist.

In dem in Figur 2 dargestellten Ausführungsbeispiel wird das über Leitung 11 zugeführte Syntheserohgas vor einer Verdichtung in die zwei Teile 12 und 13 aufgeteilt. Der ein Teil 12 des Syntheserohgases wird anschließend dem Rohgasverdichter V1 zugeleitet und dort zum Syntheserohgasstrom 14 verdichtet, dem über Leitung 15 die für eine nachfolgende Wassergas-Shift-Reaktion erforderliche Wassermenge in Form von Wasserdampf zugemischt wird. Das Gemisch aus Syntheserohgas und Wasserdampf 16, wird anschließend in den Wassergas-Shift-Reaktor WS' eingeleitet und dort konvertiert. Der aus dem Wassergas-Shift-Reaktor WS' abgezogene Gasstrom 17 (konvertierttes Gas), der ein höheres H₂/CO-Verhältnis aufweist, als es für das Synthesegas gefordert wird, wird nachfolgend in der Gasreinigung W1 von unerwünschten Substanzen - vor allem von Kohlendioxid - gereinigt. Der zweite Teil 13 des Syntheserohgases wird in die Gasreinigung W2 eingeleitet und dort ebenfalls von Substanzen, die im Synthesegas unerwünscht sind, befreit. Der gereinigte Gasstrom 18 wird aus der Gasreinigung W2 abgezogen und anschließend im Verdichter V2 zum Gasstrom 19 verdichtet. Der Gasstrom 19, dessen Druck zumindest so hoch, wie der geforderte Synthesegasdruck, wird mit dem in der Gasreinigung W1 aus dem Gasstrom 17 durch Reinigung erzeugten Gasstrom 20 zum Gasstrom 21 vereinigt und als Synthesegas zur Anlagengrenze geführt.

## Patentansprüche

1. Verfahren zur Erzeugung eines Wasserstoff (H₂) und/oder Kohlenmonoxid (CO) enthaltenden Gasproduktes mit definierter chemischer Zusammensetzung (Synthesegas) (9, 21) aus einem Kohlenmonoxid (CO) enthaltenden Rohgas (Syntheserohgas) (1, 11), wobei zumindest ein Teil des Syntheserohgases (4,14) mit Wasserdampf (5, 15) angereichert und nachfolgend einer Konvertierung durch Wassergas-Shift (WS, WS') sowie einer eine physikalische Gaswäsche umfassenden Gasreinigung (W, W1) unterzogen wird, und wobei Gas zur Einstellung des Produktdruckes (Synthesegasdruck) verdichtet wird, **dadurch gekennzeichnet, dass** zumindest ein Teil des Syntheserohgases (1, 12) einer Verdichtung (Rohgasverdichtung) (V, V1) unterzogen wird.

2. Verfahren nach Anspruch 1, **dadurch gekennzeichnet, dass** ein Teil des Syntheserohgases (unkonvertiertes Gas) (3) nach der Rohgasverdichtung (V) aus dem Syntheserohgas (2) abgezweigt und einer vorzugsweise eine physikalische Gaswäsche umfassenden Gasreinigung (W) unterzogen wird.

3. Verfahren nach Anspruch 1, **dadurch gekennzeichnet, dass** ein Teil des Syntheserohgases (unkonvertiertes Gas) (13) vor der Rohgasverdichtung (V1) aus dem Syntheserohgas (11) abgezweigt und einer vorzugsweise eine physikalische Gaswäsche umfassenden Gasreinigung (W2) unterzogen wird.

4. Verfahren nach Anspruch 3, **dadurch gekennzeichnet, dass** das unkonvertierte Gas vor der Gasreinigung verdichtet wird.

5. Verfahren nach Anspruch 3, **dadurch gekennzeichnet, dass** das unkonvertierte Gas (13) nach der Gasreinigung (W2) verdichtet wird.

6. Verfahren nach einem der Ansprüche 1 bis 5, **dadurch gekennzeichnet, dass** in der oder den physikalischen Gaswäschen tiefkaltes Methanol als Waschmittel eingesetzt wird.

7. Verfahren nach einem der Ansprüche 1 bis 6, **dadurch gekennzeichnet, dass** als Produkt aus dem Syntheserohgas, neben Synthesegas, zumindest Wasserstoff gewonnen wird, wobei der Wasserstoff vorzugsweise aus einem wasserstoffreichen Gasstrom nach der Gasreinigung abgetrennt wird.

8. Vorrichtung zur Erzeugung eines Wasserstoff (H₂) und/oder Kohlenmonoxid (CO) enthaltenden Gasproduktes (Synthesegas) mit definierter chemischer Zusammensetzung (Synthesegas) (9, 21) aus einem Kohlenmonoxid (CO) enthaltenden Rohgas (Syntheserohgas) (1, 11), umfassend einen Reaktor (Shift-Reaktor) (WS, WS') in welchem mit Wasserdampf (5, 15) angereichertes Syntheserohgas (6, 16) einer Konvertierung durch Wassergas-Shift unterziehbar ist, eine physikalische Gaswäsche (W, W1) sowie einen Gasverdichter (V, V1), mit dem zur Einstellung des Produktdruckes (Synthesegasdruck) Gas verdichtbar ist, **dadurch gekennzeichnet, dass** es sich bei dem Gasverdichter (V, V1) um einen Verdichter zur Verdichtung von Syntheserohgas (Rohgasverdichter) handelt, in welchem das dem Shift-Reaktor (WS, WS') zuzuführende Syntheserohgas (1, 12) verdichtbar ist.

9. Vorrichtung nach Anspruch 8, **dadurch gekennzeichnet, dass** eine Teilmenge des Syntheserohgases (unkonvertiertes Gas) (3) nach dem Rohgasverdichter (V) aus dem Syntheserohgas (2) abzweigbar und einer vorzugsweise eine physikalische Gaswäsche umfassenden Gasreinigung (W) zuführbar ist.

10. Vorrichtung nach Anspruch 8, **dadurch gekennzeichnet, dass** eine Teilmenge des Syntheserohgases (unkonvertiertes Gas) (13) vor dem Rohgasverdichter (V1) aus dem Syntheserohgas (11) abzweigbar und einer vorzugsweise eine physikalische Gaswäschen umfassenden Gasreinigung (W2) zuführbar ist.

11. Vorrichtung nach Anspruch 10, **dadurch gekennzeichnet, dass** sie einen zweiten Verdichter umfasst, mit welchem das unkonvertierte Gas vor der Gasreinigung verdichtbar ist.

12. Vorrichtung nach Anspruch 10, **dadurch gekennzeichnet, dass** sie einen zweiten Verdichter (V2) umfasst, mit welchem der aus dem unkonvertierten Gas (13) in der Gasreinigung erzeugte Gasstrom (18) verdichtbar ist.

13. Vorrichtung nach einem der Ansprüche 8 bis 12, **dadurch gekennzeichnet, dass** wenigstens eine der physikalischen Gaswäschen als Methanolwäsche ausgeführt ist.

14. Vorrichtung nach einem der Ansprüche 8 bis 13, **dadurch gekennzeichnet, dass** sie eine Einrichtung zur Gewinnung eines Wasserstoffproduktes umfasst, die vorzugsweise nach der Gasreinigung angeordnet ist, und in welcher Wasserstoff aus einem wasserstoffreichen Gasstrom abtrennbar ist.
